# EUROPEAN PATENT SPECIFICATION

(11) **EP 2 275 595 B1**
(45) Date of publication and mention of the grant of the patent: **03.05.2017**
(21) Application number: 10012473.4
(22) Date of filing: 09.03.2006
(51) Int. Cl.: D06F 25/00, D06F 58/24, D06F 37/26

(54) **Washing and drying machine**
Waschtrockner
Machine à laver séchante

(30) Priority: 06.04.2005 KR 20050028483
(43) Date of publication of application: 19.01.2011
(62) Divisional of application: 06251271.0
(73) Proprietor: LG ELECTRONICS INC., Yeongdeungpo-gu Seoul 07336 (KR)
(72) Inventor: Lim, Hee Tae, Wonmi-ku Buchun-si Kyungki-do, 420-757 (KR); Hong, Sang Wook, Keumchun-ku Seoul, 153-03 (KR)
(74) Representative: Ter Meer Steinmeister & Partner

(56) References cited:
- EP-A- 0 942 093
- WO-A1-94/10370
- DE-A1- 1 610 090
- DE-U1- 9 103 637
- JP-A- 2 241 486
- US-A1- 2002 020 197

## Description

The present invention relates to a washing and drying machine.

Generally, a washing machine is a machine that is capable of removing pollutants from clothes or bedclothes (hereinafter, referred to as "laundry") with detergent-dissolved water or pure water (hereinafter, referred to as "washing water"). Recently, a large number of washing machines have incorporated a drying unit for drying the laundry, and therefore, each such washing machine has a drying function.

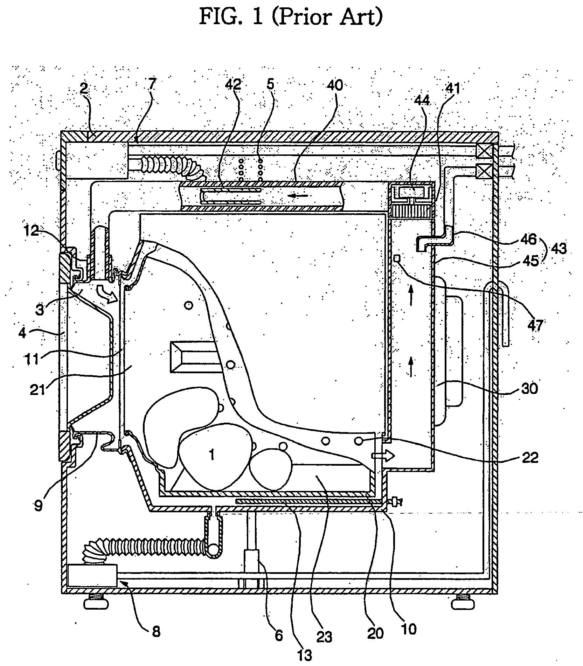

FIG. 1 is a longitudinal sectional view illustrating the interior of a conventional washing and drying machine.

As shown in FIG. 1, the conventional washing and drying machine comprises: a cabinet 2 forming the exterior of the washing machine; a tub 10 mounted in the cabinet 2 for receiving washing water; a drum 20 rotatably disposed in the tub 10 for receiving laundry 1; and a motor 30 for rotating the drum 20.

At the front surface of the cabinet 2 is formed a laundry inlet/outlet hole 3, through which the laundry 1 is put into the drum 20 and removed from the drum 20. The laundry inlet/outlet hole 3 has a door 4.

The tub 10 is mounted in the cabinet suspended by springs 5 connected between the upper end of the cabinet 2 and the tub 10. Also, the tub 10 is supported by a damper 6 disposed at the lower end of the cabinet 2 such that shock applied to the tub 10 is effectively damped by the damper 6.

To the tub 10 is connected a water supply unit 7 for supplying washing water into the tub 10 from the outside of the washing machine. To the tub 10 is also connected a drainage unit 8 for draining the washing water out of the tub 10.

At the center part of the front surface of the tub 10 is formed a tub access hole 11, through which the laundry 1 and air are introduced into or discharged from the tub 10. To the front surface of the tub 10 is attached a gasket 9, which comes into sealing contact with the door 4, when the door 4 is closed, for preventing the laundry 1, the washing water, and the air from leaking through a gap between the tub 10 and the door 4.

At the inner bottom surface of the tub 10 is mounted a washing heater 13 for heating the washing water such that the laundry can be washed with hot water. At the inner bottom surface of the tub 10 is also mounted a washing temperature sensor (not shown) for detecting the temperature of the washing water.

At the front surface of the drum 20 is formed a drum opening hole 21, through which the laundry 1 and air are introduced into or discharged from the drum 20. At the circumferential surface of the drum 20 are formed a plurality of through-holes 22, for the passage of which washing water and air to and from the drum 20.
To inner wall of the drum 20 are attached lifters 23, by which the laundry 1 is lifted and then falls.

The washing and drying machine further comprises: a drying duct 40, having a circulating fan 41 and a drying heater 42, for supplying hot air into the drum 20; and a condenser 43 for condensing wet air generated when the drum 20 is dried and guiding the condensed air to the drying duct 40.

In the drying duct 40 is mounted a fan motor 44 for rotating the circulating fan 41. The outlet end of the drying duct 40 is fixedly inserted into or fitted onto a drying duct connection member 12, which is formed at the gasket 9.

The condenser 43 comprises: a condensing duct 45 connected to the rear part of the tub 10 for allowing air to pass; and a cooling water supply unit 46 for supplying cooling water into the condensing duct 45 such that the air passing through the condensing duct 45 is cooled by the cooling water and thus subjected to a condensing process.

The inlet end of the condensing duct 45 is diagonally opposite to the outlet end of the drying duct 40 such that dry air introduced into the tub 10 from the drying duct 40 is uniformly circulated in the tub 10, and is then discharged into the condensing duct 45.

Specifically, the outlet end of the drying duct 40 is connected to the front upper part of the tub 10 while the inlet end of the condensing duct 45 is connected to the rear lower part of the tub 10.

In the condensing duct 45 is mounted a condenser temperature sensor 47 for detecting the temperature of air cooled by the cooling water.

When a user puts laundry 1 into the drum 20, closes the door 4 and operates the washing machine, washing water is introduced into the cabinet 2 through the water supply unit 7.

The introduced washing water is supplied into the tub 10, and is then introduced into the drum 20 through the drum opening hole 21 or the through-holes 22 such that the laundry 1 is wetted by the washing water.

As the motor 30 is operated, the drum 20 is rotated, and as a result, pollutants are separated from the laundry 1 by the washing water.

After the above-described washing process is completed, the dirty washing water is drained out of the tub 10 through the drainage unit 8. Subsequently, a rinsing process is performed several times.

After the rinsing processes are completed, a water removing or spinning process is performed to remove moisture from the laundry 1 by centrifugal force.

After the water removal process is completed, a drying process for drying the laundry 1 is performed. The drum 20 is rotated by the motor 30, and the circulating fan 41 and the drying heater 42 are turned on. Also, the cooling water is supplied into the condensing duct 45 through the cooling water supply unit 46.

As the circulating fan 41 is rotated, low-temperature and high-humidity air in the drum 20 is introduced into the condensing duct 45 through the through-holes 22 of the drum 20 and the tub 10.

At this time, the cooling water supplied through the cooling water supply unit 46 falls into the condensing duct 45, and the moisture in the air introduced into the condensing duct 45 is condensed by the cooling water. As a result, the air is dried.

After the air passes through the condensing duct 45, the air passes through the drying duct 40. At this time, the air is heated by the heater 42, and as a result, the air is changed into hot air. The hot air is blown to the front surface of the drum 20 through the outlet end of the drying duct 40.

The laundry 1 is dried in the drum 20 by the blown hot air, and as a result, the hot air is changed into low-temperature and high-humidity air, which flows into the condensing duct 45.

In the conventional washing and drying machine with the above-state construction, however, it is necessary that the condensing duct 45 be relatively long so as to sufficiently condense moisture contained in the air passing through the condensing duct 45. As a result, flow resistance is large, and the capacities of the tub 10 and the drum 20 are relatively reduced. Furthermore, a great amount of cooling water is consumed to cool the condensing duct 45. Therefore, the operating costs of the conventional washing and drying machine are increased.

JP 02-241486 A is concerned with a drying mechanism for a washer or dryer, which comprises a cabinet, a tub placed in the cabinet, and a drum rotatably placed in the tub. The tub comprises a duct communication port for discharging hot air from the inside of the tub. Further, a fan and a heater are provided to generate hot air to supply into the tub to dry laundry in the drum. A drying duct for circulating hot air comprises an introduction portion, which is directly connected to the duct communication port of the tub for receiving the condensed hot air discharged from the tub. An air-cooling type condensing unit comprises a cooling drum placed around the outer tank or drum so as to form a gap between the cooling drum and the outer drum through which ambient air is forced to flow by means of a fan. Ambient air is sucked in through port and discharged through port.

EP 0 942 093 A1 is concerned with an electric washer-dryer, which comprises a cabinet, a tub placed in the cabinet, and a drum rotatably placed in the tub. For generating a hot air flow a fan and a heater are arranged on the downstream side of a heat exchanger so as to supply hot air into the tub via a hot air supply channel, which is connected to an inlet port provided in an upper part of the tub via a flexible and extendable tube. The air inlet side of the heat exchanger is connected to a discharge hole in the bottom of the tub by means of a connection duct. In addition, a cooling air blower is provided in a side face of the cabinet in order to introduce outside air for cooling the outer tub. Thus, it is possible to blow cooling air to the outer tub. Then, the inside of the outer tub is cooled down and the humid hot air flowing inside the outer tub is efficiently heat-exchanged and dehydrated. Thus, heat exchange performance can be improved by using such a cooling air blower in addition to a conventional heat exchanger or condensing duct. The condensing duct with heater and blower at its downstream portion can be arranged outside the cabinet or inside the cabinet. DE 1 610 090 A1 discloses a washing and drying machine according to the preamble of claim 1.

The present invention provides a washing and drying machine according to the appended claims. The air-cooling type condensing unit includes: an inlet port formed at one side of the cabinet for allowing outside air to be introduced into the cabinet therethrough; and an outlet port formed at the other side of the cabinet for allowing the outside air, which has exchanged heat with the circumferential surface of the tub, to be discharged out of the cabinet therethrough.

The air-cooling type condensing unit further includes: an introduction channel for guiding the outside air introduced through the inlet port into the tub; a condensing channel for performing heat exchange between the outside air introduced into the tub through the introduction channel and the inner circumferential surface of the tub to condense air used to dry the laundry; and a discharge channel for guiding the heat-exchanged air such that the air is discharged out of the cabinet through the outlet port.

The air-cooling type condensing unit further includes: a condensing plate mounted in the condensing channel for facilitating heat exchange between the outside air and the inner circumferential surface of the tub.

The condensing plate is spaced a predetermined distance from the inner circumferential surface of the tub such that the outside air can flow along the inner wall of the tub.

The air-cooling type condensing unit further includes: a blowing fan mounted in the introduction channel.

The air-cooling type condensing unit further includes: a condensing channel defined by the inside surface of the cabinet and the outer circumferential surface of the tub for allowing the outside air introduced through the inlet port to flow between the outer circumferential surface of the tub and the inside surface of the cabinet and then guiding the air such that the air is discharged out of the cabinet through the outlet port.

The air-cooling type condensing unit further includes: a condensing plate mounted at the circumferential surface of the tub for facilitating heat exchange between the outside air and the circumferential surface of the tub.

The air-cooling type condensing unit further includes: a blowing fan mounted at the inlet port.

The condensing plate is made of metal, and is embossed.

The outside air exchanges heat with the circumferential surface of the tub to condense air used to dry the laundry. As a result, no cooling water is used to condense air used to dry the laundry. Consequently, the present invention has the effect of reducing consumption of water, and therefore, decreasing the maintenance costs of the washing and drying machine.

In this case, no condensing duct is necessary. Consequently, flow resistance is decreased, and therefore, drying efficiency is improved. In addition, sufficient space is provided between the rear surface of the tub and the cabinet. Consequently, the present invention has the effect of increasing the volume of the drum, and therefore, increasing the washing/drying capacity of the washing and drying machine.

The above and other objects, features and other advantages of the present invention will be more clearly understood from the following detailed description taken in conjunction with the accompanying drawings, in which:
FIG. 1 is a longitudinal sectional view illustrating a conventional washing and drying machine;
FIG. 2 is an exploded perspective view illustrating a washing and drying machine according to a first arrangement not covered by the present invention, but useful to understand it;
FIG. 3 is a perspective view illustrating a tub of the washing and drying machine according to the first arrangement;
FIG. 4 is a cross-sectional view of the washing and drying machine according to the first arrangement;
FIG. 5 is a cross-sectional view illustrating a washing and drying machine according to a second arrangement not covered by the present invention; and
FIG. 6 is a cross-sectional view illustrating a washing and drying machine according to an embodiment of the present invention.

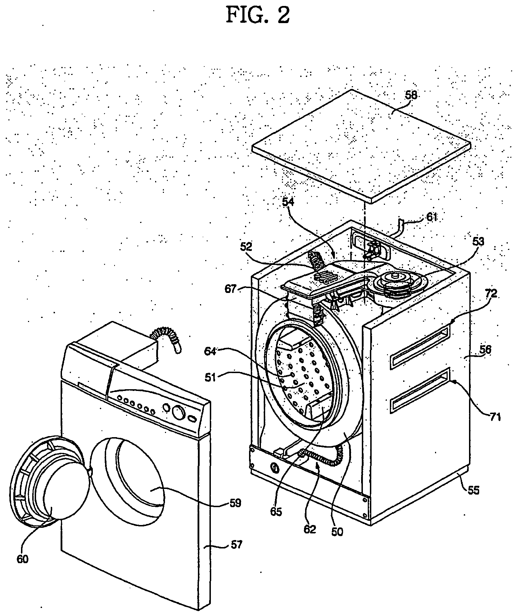

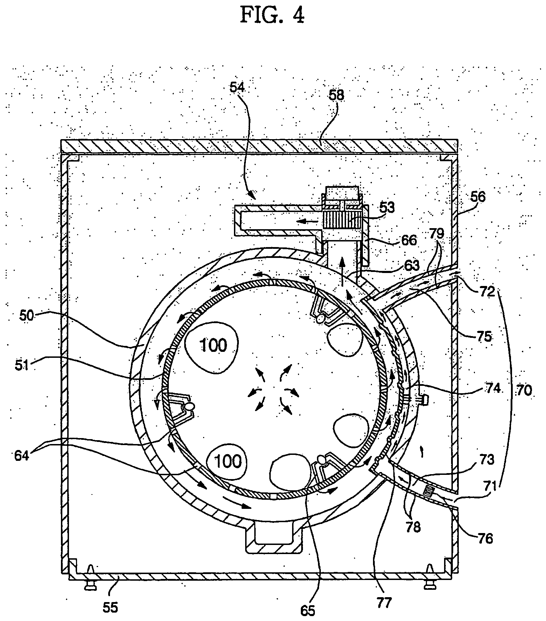

As shown in FIGS. 2 to 4, the washing and drying machine according to the first arrangement includes: a tub 50 provided in a cabinet in a suspended manner; a drum 51 rotatably disposed inside the tub 50; a drying duct 54, having a drying heater 52 and a circulating fan 53, for supplying hot air into the drum 51 to dry laundry 100; and an air-cooling type condensing unit 70 for performing heat exchange between air introduced from the outside of the cabinet and the circumferential surface of the tub 50 to condense air used to dry the laundry 100 in the drum 51.

The cabinet includes: a base pan 55; a cabinet body 56 mounted on the base pan 55; a cabinet cover 57 disposed in the front of the cabinet body 56; and a top plate 58 mounted on the cabinet body 56 and the cabinet cover 57.

At the cabinet cover 57 is formed a laundry access hole 59, through which the laundry 100 is placed into or removed from the drum 51. To the cabinet cover 57 is also pivotably attached a door 60 opening and closing the laundry access hole 59.

To the tub 50 is connected a water supply unit 61 for supplying washing water into the tub 50 from the outside of the washing machine. To the tub 50 is also connected a drainage unit 62 for draining the washing water out of the tub 50.

At the center portion of the front surface of the tub 50 is formed a tub opening hole, through which the laundry 100 and air are introduced into or discharged from the tub 50. To the front surface of the tub 50 is attached a gasket (not shown), which comes into tight sealing contact with the door 60, when the door 60 is closed, for preventing the laundry 100, the washing water, and the air from being discharged from the gap between the tub 50 and the door 60.

At the upper part of the circumferential surface of the tub 50 is formed a duct communication port 63, to which the drying duct 54 is connected.

At the front surface of the drum 51 is formed a drum opening hole, through which the laundry 100 and air are introduced into or discharged from the drum 51. At the circumferential surface and the rear surface of the drum 51 are formed a plurality of through-holes 64, through which washing water and air are introduced into or discharged from the drum 51.

To the inner wall of the drum 51 are attached lifters 65, by which the laundry 100 is agitated as the drum rotates.

The drying duct 54 includes: an introduction portion 66 for introducing air used to dry the laundry 100 in the drum 51; and a discharge portion 67 for heating the air introduced through the introduction portion 66 and discharging the heated air into the drum 51.

The introduction portion 66 is connected to the duct communication port 63. The discharge portion 67 is directly connected to the front surface of the tub 50 in the present arrangement. Alternatively, the discharge portion 67 may be connected to the gasket (not shown).

The air-cooling type condensing unit 70 includes: an inlet port 71 formed at one side of the cabinet body 56 for allowing outside air to be introduced into the cabinet therethrough; and an outlet port 72 formed at the other side of the cabinet body 56 for allowing the spent air, which has exchanged heat with the circumferential surface of the tub 50, to be discharged out of the cabinet therethrough.

In the following description of the present arrangement, the inlet port 71 and the outlet port 72 are formed at the right or left side surface of the cabinet body 56 such that the inlet port 71 and the outlet port 72 are vertically spaced a predetermined distance from each other. Alternatively, the inlet port 71 and the outlet port 72 may be spaced from each other in an alternative configuration, such as, for example, the inlet port 71 and outlet port 72 may be horizontally as well as vertically spaced from each other.

The air-cooling type condensing unit 70 further includes: an introduction channel 73 for guiding the outside air introduced through the inlet port 71 into the tub 50; a condensing channel 74 for performing heat exchange between the outside air introduced into the tub 50 through the introduction channel 73 and the inner circumferential surface of the tub 50 to condense air used to dry the laundry 100; and a discharge channel 75 for guiding the heat-exchanged air such that the air is discharged out of the cabinet body 56 through the outlet port 72.

The introduction channel 73 is formed by a first channel guide 78 connected between the inlet port 71 and the circumferential surface of the tub 50, and the outlet channel 75 is formed by a second channel guide 79 connected between the outlet port 72 and the circumferential surface of the tub 50.

In the condensing channel 74 is mounted a condensing plate 77 for facilitating heat exchange between the outside air and the inner circumferential surface of the tub 50.

Preferably, the condensing plate 77 is spaced a predetermined distance from the inner circumferential surface of the tub 50 such that the outside air introduced into the tub 50 through the introduction channel 73 can flow along the inner wall of the tub 50.

As will be appreciated from the above, the condensing channel 74 is defined by the condensing plate 77 and the inner circumferential surface of the tub 50.

The condensing plate 77 may be curved. Further, the condensing plate 77 may be curved such that the radius of curvature of condensing plate 77 has a radius centred on the axis of the tub, such that it has a radius of curvature conforming to that of the inner wall of the tub 50 to define the channel 74.

The condensing plate 77 may be made of a suitable material such as, for example, metal having high thermal conductivity. Additionally, the condensing plate may be embossed to increase its surface area..

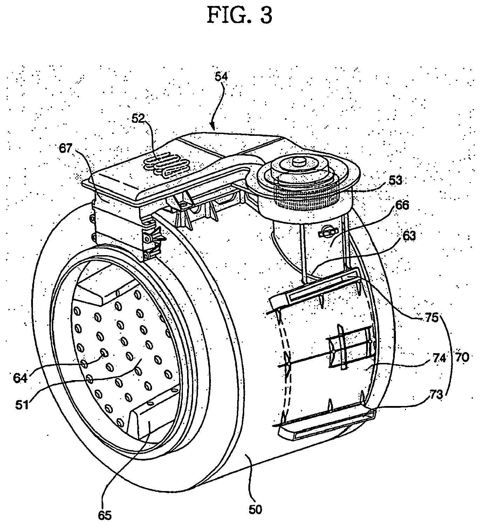

The condensing channel 74 is provided below the duct communication port 63. As shown in FIG. 3, the condensing channel 74 has a predetermined width extending between the rear side of the tub 50 and the front side of the tub 50 adjacent the duct communication port 63.

In the introduction channel 73 are mounted a blowing fan 76 and a motor (not shown), by which air flow is increased, and efficiency of heat exchange is improved through forced convection.

In the drying process for drying the laundry 100, the drum 51 is rotated, and the circulating fan 53, the drying heater 52, and the blowing fan 76 are turned on.

As the drum 51 is rotated, the laundry 100 is shaken and tossed in the drum 51. At this time air in the drum 51 flows toward the through-holes 64 of the drum 51 by a blowing force generated when the circulating fan 53 is turning.

The air flowing toward the through-holes 64 of the drum 51 comes into contact with the laundry 100. As a result, the laundry 100 is dried, and the air is changed into low-temperature and high-humidity air. The low-temperature and high-humidity air flows between the drum 51 and the tub 50 through the through-holes 64 of the drum 51.

The low-temperature and high-humidity air, i.e., the wet air, between the drum 51 and the tub 50 flows adjacent the condensing channel 74. As a result, heat of the wet air is transmitted to the condensing plate 77.

At this time, outside air introduced through the inlet port 71 is guided into the condensing channel 74 through the introduction channel 73. The outside air guided into the condensing channel 73 absorbs heat from the condensing plate 77 and the inner wall of the tub 50, and is then discharged out of the cabinet body 56 through the outlet channel 65 and the outlet port 72.

Specifically, the outside air introduced through the inlet port 71 exchanges heat with the condensing plate 77 and the inner wall of the tub 50 to cool the condensing plate 77 and the inner wall of the tub 50, and the heat of the wet air is transmitted to the condensing plate 77. As a result, moisture contained in the wet air is condensed on the condensing plate 77, and therefore, the wet air is changed into low-humidity air.

The low-humidity air is introduced into the drying duct 54 through the introduction part 66 of the drying duct 54, and is then heated by the drying heater 52. As a result, the low-humidity air is changed into hot air.

The hot air is discharged into the tub 50 through the discharge part 67 of the drying duct 54 to dry the laundry 100 in the drum 51. The above-described procedure is repetitively carried out to continuously dry the laundry 100.

Meanwhile, the water condensed on the surface of the condensing plate 77 falls along the condensing plate 77, and is then drained out of the cabinet through the drainage unit 62.

As can be easily understood from the above description, outside air is used to condense moisture out of air used to dry the laundry 100. As a result, no cooling water is used to condense air used to dry the laundry 100. Consequently, consumption of water is reduced.

Furthermore, no condensing duct is necessary. Consequently, air flow resistance is decreased. In addition, the structure of the channels, through which the outside air is introduced and discharged, is simple in this arrangement, and therefore, sufficient space is provided between the rear surface of the tub 50 and the cabinet body 56.

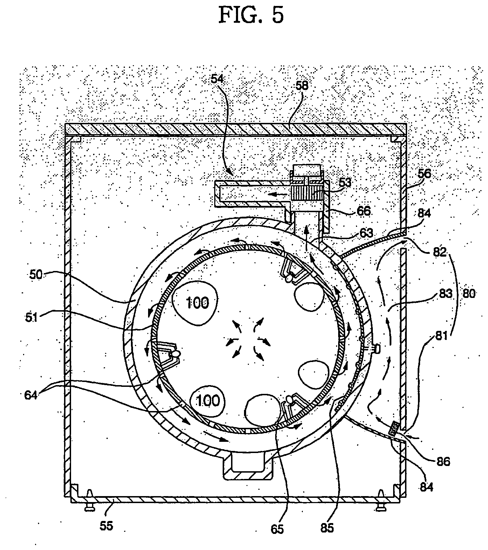

FIG. 5 is a cross-sectional view illustrating a washing and drying machine according to a second arrangement. The washing and drying machine according to the second arrangement includes an air-cooling type condensing unit 80. As shown in FIG. 5, the air-cooling type condensing unit 80 includes: an inlet port 81 formed at one side of the cabinet body 56 for allowing outside air to be introduced into the cabinet; an outlet port 82 formed at the other side of the cabinet body 56 for allowing the outside air, which has exchanged heat with the circumferential surface of the tub 50, to be discharged out of the cabinet therethrough; and a condensing channel 83 defined by the inside surface of the cabinet body 56 and the outer circumferential surface of the tub 50 for allowing the outside air introduced through the inlet port 81 to flow between the outer circumferential surface of the tub 50 and the inside surface of the cabinet body 56 and then guiding the air such that the air is discharged out of the cabinet body 56 through the outlet port 82.

Between the outer circumferential surface of the tub 50 and the inside surface of the cabinet body 56 is connected a third channel guide 84 for directing the outside air such that the outside air makes partial contact with the outer circumferential surface of the tub 50. The condensing channel 83 is defined by the outer circumferential surface of the tub 50, the cabinet body 56, and the third channel guide 84.

Other components of the washing and drying machine according to this second arrangement are identical in construction and operation to those of the washing and drying machine according to the first arrangement. Therefore, the components of the washing and drying machine according to the second arrangement, which are the same as those of the washing and drying machine according to the first arrangement, are indicated by the same reference numerals as those of the washing and drying machine according to the first arrangement, and further detailed description thereof will not be given.

At the inner or outer circumferential surface of the tub 50 may be mounted a condensing plate 85 for facilitating heat exchange between the outside air and the inner or outer circumferential surface of the tub 50. In the illustrated arrangement, the condensing plate 85 is tightly attached to the inner circumferential surface of the tub 50.

Also, a blowing fan 86 is mounted at the inlet port 81 such that the blowing fan 86 is perpendicular to the flow direction of the outside air.

In the washing and drying machine according to this second arrangement, the channel is constructed such that the outside air does not flow into the inside of the tub 50, i.e., the outside air flows between the outer circumferential surface of the tub 50 and the inner wall of the cabinet. Consequently, the construction of the channel is simplified.

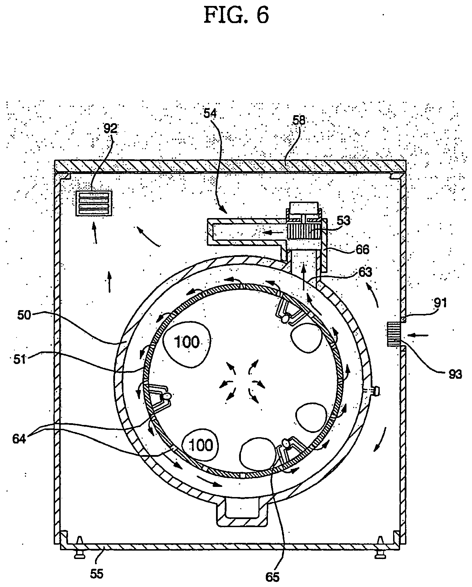

FIG. 6 is a cross-sectional view illustrating a washing and drying machine according to an embodiment of the invention.

The washing and drying machine according to the embodiment includes an air-cooling type condensing unit. As shown in FIG. 6, the air-cooling type condensing unit includes: an inlet port 91 formed at one side of the cabinet body 56 for allowing outside air to be introduced into the cabinet therethrough; and an outlet port 92 formed at the other side of the cabinet body 56 for allowing the outside air, which has exchanged heat with the circumferential surface of the tub 50, to be discharged out of the cabinet therethrough.

In the illustrated embodiment, the inlet port 91 is formed on the right or left side surface of the cabinet body 56, and the outlet port 92 is formed on the rear surface of the cabinet body 56. Alternatively, the inlet port 91 may be formed on another surface of the cabinet body 56 such as the rear, top or front surface; and the outlet port 92 may be formed on a side, top or front surface.

The washing and drying machine according to this embodiment is the same in construction and operation as the washing and drying machine according to the first arrangement except that the outside air introduced through the inlet port 91 exchanges heat with the entire outer circumferential surface of the tub 50, while passing through the cabinet, to condense moisture out of air used to dry the laundry 100. Therefore, other components of the washing and drying machine according to this embodiment, which are the same in construction and operation to those of the washing and drying machine according to the first arrangement, are indicated by the same reference numerals as those of the washing and drying machine according to the first arrangement, and further detailed description thereof will not be given.

At the inlet port 91 is mounted a blowing fan 93 for increasing air flow and cooling the outer circumferential surface of the tub 50 through forced convection.

Another blowing fan may be mounted at the outlet port 92. In the illustrated embodiment, however, the blowing fan 93 is mounted only at the inlet port 91.

As apparent from the above description, embodiments of the washing and drying machine have the following effects.

The outside air exchanges heat with the circumferential surface of the tub to condense moisture out of air used to dry the laundry. As a result, no cooling water is used in the condensing process used to dry the laundry. Consequently, the present invention has the effect of reducing consumption of water, and therefore, decreasing the operating costs of the washing and drying machine.

Furthermore, no condensing duct is necessary. Consequently, flow resistance is decreased, and therefore, drying efficiency is improved. In addition, sufficient space is provided between the rear surface of the tub and the cabinet. Consequently, the present invention has the effect of increasing the volume of the drum, and therefore, increasing the washing/drying capacity of the washing and drying machine.

Although the present invention has been described with reference to exemplary embodiments, it is understood that the words that have been used are words of description and illustration, rather than words of limitation. Changes may be made within the purview of the appended claims, as presently stated and as amended, without departing from the scope of the invention which is solely defined by the appended claims. Although the invention has been described with reference to particular means, materials and embodiments, the invention is not intended to be limited to the particulars disclosed. Rather, the invention extends to all functionally equivalent structures, methods and uses solely within the scope of the appended claims.

## Claims

1. A washing and drying machine comprising:
- a cabinet forming an outer appearance of the washing and drying machine;
- a tub (50) mounted in the cabinet;
- a drum (51) rotatably provided inside the tub;
- a drying duct (54), having a drying heater (52) and a circulating fan (53), said drying duct supplying hot air into the drum (51) to dry laundry; and
- an air-cooling condensing unit that performs heat exchange between air introduced from the outside of the cabinet and at least a part of the tub (50) to dry air used to dry the laundry in the drum (51); the air-cooling condensing unit comprising:
an inlet port (91) allowing outside air to be introduced into the cabinet,
an outlet port (92) allowing the outside air, which has passed the tub (50) to be discharged out of the cabinet,
and
a condensing channel defined by the inside surface of the cabinet and the outer circumferential surface of the tub (51) to allow the outside air introduced through the inlet port (91) to flow between the outer circumferential surface of the tub (51) and the inside surface of the cabinet and then guide the air such that the air is discharged out of the cabinet through the outlet port (92),
wherein
the inlet port (91) is formed on a side, top, rear or front cabinet surface,
the outlet port (92) is formed on a side, top, rear or front cabinet surface,
and
the outside air introduced through the inlet port (91) exchanges heat with the entire outer circumferential surface of the tub (50), while passing through the cabinet, to condense moisture out of air used to dry the laundry (100),
**characterized in that**
at the upper part of the circumferential surface of the tub (50) is formed a duct communication port (63), to which the drying duct(54) is connected,
and **in that** the drying duct (54) includes:
an introduction portion (66) for introducing air used to dry the laundry (100) in the drum (51),
and
a discharge portion (67) for heating the air introduced through the introduction portion (66) and discharging the heated air into the drum (51);
wherein
the introduction portion (66) is connected to the duct communication port (63), and
the discharge portion (67) is directly connected to the front surface of the tub (50).

2. The washing and drying machine of claim 1, wherein the air-cooling condensing unit comprises a blowing fan (93) mounted at said inlet port.

## Patentansprüche

1. Wasch- und Trockenmaschine, die Folgendes umfasst:
- ein Gehäuse, das ein äußeres Erscheinungsbild der Wasch- und Trockenmaschine bildet;
- einen Bottich (50), der in dem Gehäuse angebracht ist;
- eine Trommel (51), die in dem Bottich drehbar vorgesehen ist;
- eine Trocknungsleitung (54), die ein Trocknungsheizelement (52) und ein Zirkulationsgebläse (53) aufweist, wobei die Trocknungsleitung der Trommel (51) Heißluft zuführt, um Wäsche zu trocknen;
und
- eine Luftkühlung-Kondensationseinheit, die einen Wärmeaustausch zwischen Luft, die von außerhalb des Gehäuses eingeleitet wird, und wenigstens einem Teil des Bottichs (50) durchführt, um Luft zu trocknen, die verwendet wird, um die Wäsche in der Trommel (51) zu trocknen;
wobei die Luftkühlung-Kondensationseinheit Folgendes umfasst:
einen Einlassanschluss (91), damit Außenluft in das Gehäuse eingeleitet werden kann,
einen Auslassanschluss (92), damit die Außenluft, die am Bottich (50) vorbei gelangt ist, aus dem Gehäuse abgeführt wird,
und
einen Kondensationskanal, der durch die innere Oberfläche des Gehäuses und die Außenumfangsfläche des Bottichs (51) definiert ist, damit die Außenluft, die durch den Einlassanschluss (91) eingeleitet wird, zwischen der Außenumfangsfläche des Bottichs (51) und der inneren Oberfläche des Gehäuses strömen kann, so dass die Luft dann so geleitet werden kann, dass sie aus dem Gehäuse durch den Auslassanschluss (92) abgeführt wird,
wobei
der Einlassanschluss (91) an einer seitlichen, oberen, hinteren oder vorderen Oberfläche des Gehäuses gebildet ist,
der Auslassanschluss (92) an einer seitlichen, oberen, hinteren oder vorderen Oberfläche des Gehäuses gebildet ist,
und
die Außenluft, die durch den Einlassanschluss (91) eingeleitet wird, mit der gesamten Außenumfangsfläche des Bottichs (50) Wärme tauscht, während sie durch das Gehäuse gelangt, um Feuchtigkeit aus Luft, die zum Trocknen der Wäsche (100) verwendet wird, kondensieren zu lassen,
**dadurch gekennzeichnet, dass**
bei dem oberen Teil der Umfangsfläche des Bottichs (50) ein Leitungskommunikationsanschluss (63) gebildet ist, mit dem die Trocknungsleitung (54) verbunden ist,
und dadurch, dass
die Trocknungsleitung (54) Folgendes umfasst:
einen Einleitungsabschnitt (66) zum Einleiten von Luft, die zum Trocknen der Wäsche (100) in der Trommel (51) verwendet wird, und
einen Abführungsabschnitt (67) zum Erhitzen der Luft, die durch den Einleitungsabschnitt (66) eingeleitet wird, und zum Abführen der erhitzten Luft in die Trommel (51);
wobei
der Einleitungsabschnitt (66) mit dem Leitungskommunikationsanschluss (63) verbunden ist, und
der Abführungsabschnitt (67) mit der vorderen Oberfläche des Bottichs (50) direkt verbunden ist.

2. Wasch- und Trockenmaschine nach Anspruch 1, wobei die Luftkühlung-Kondensationseinheit ein Gebläse (93) umfasst, das an dem Einlassanschluss angebracht ist.

## Revendications

1. Machine lave-linge sèche-linge comprenant :
- une carrosserie formant un aspect extérieur de la machine lave-linge sèche-linge ;
- une cuve (50) montée dans la carrosserie ;
- un tambour (51) prévu en rotation à l'intérieur de la cuve ;
- un conduit de séchage (54) ayant un dispositif chauffant de séchage (52) et un ventilateur de circulation (53), ledit conduit de séchage fournissant de l'air chaud dans le tambour (51) pour sécher le linge ; et
- une unité de condensation à refroidissement d'air qui effectue un échange de chaleur entre l'air introduit depuis l'extérieur de la carrosserie et au moins une partie de la cuve (50) afin de sécher l'air utilisé pour sécher le linge dans le tambour (51) ;
l'unité de condensation à refroidissement d'air comprenant :
un orifice d'entrée (91) permettant à l'air extérieur d'être introduit dans la carrosserie,
un orifice de sortie (92) permettant à l'air extérieur qui est passé par la cuve (50) d'être déchargé hors de la carrosserie, et
un canal de condensation défini par la surface intérieure de la carrosserie et la surface circonférentielle extérieure de la cuve (51) pour permettre à l'air extérieur introduit à travers l'orifice d'entrée (91) de s'écouler entre la surface circonférentielle extérieure de la cuve (51) et la surface intérieure de la carrosserie et ensuite guider l'air de telle façon que l'air est déchargé hors de la carrosserie via l'orifice de sortie (92),
dans laquelle
l'orifice d'entrée (91) est formé sur une surface latérale, supérieure, arrière ou frontale de la carrosserie,
l'orifice de sortie (92) est formé sur une surface latérale, supérieure, arrière ou frontale de la carrosserie, et
l'air extérieur introduit via l'orifice d'entrée (91) échange de la chaleur avec la surface circonférentielle extérieure entière de la cuve (50), tout en passant à travers la carrosserie, pour faire condenser l'humidité hors de l'air utilisé pour sécher le linge (100),
**caractérisé en ce que**, à la partie supérieure de la surface circonférentielle de la cuve (50) est formé un orifice de communication de conduit (63), auquel est connecté le conduit de séchage (54), et
**en ce que**
le conduit de séchage (54) inclut :
une portion d'introduction (66) pour introduire l'air utilisé pour sécher le linge (100) dans le tambour (51), et
une portion de décharge (67) pour chauffer l'air introduit via la portion d'introduction (66) et décharger l'air chauffé vers l'intérieur du tambour (51) ;
dans laquelle
la portion d'introduction (66) est connectée à l'orifice de communication de conduit (63), et
la portion de décharge (67) est directement connectée à la surface frontale de la cuve (50).

2. Machine lave-linge sèche-linge selon la revendication 1, dans laquelle l'unité de condensation à refroidissement d'air comprend un ventilateur de soufflage (93) monté au niveau dudit orifice d'entrée.
